# EUROPÄISCHE PATENTSCHRIFT

(11) **EP 2 837 848 B1**
(45) Veröffentlichungstag und Bekanntmachung des Hinweises auf die Patenterteilung: **12.06.2019**
(21) Anmeldenummer: 13004092.6
(22) Anmeldetag: 16.08.2013
(51) Int. Cl.: F16G 13/06

(54) **Rollenkette mit Wiegegelenken**
Roller chain with rocker joints
Chaîne à rouleaux dotée d'articulations oscillantes

(43) Veröffentlichungstag der Anmeldung: 18.02.2015
(73) Patentinhaber: iwis motorsysteme GmbH & Co. KG, 81369 München (DE)
(72) Erfinder: Serbin, Anke, 82481 Mittenwald (DE)
(74) Vertreter: Grünecker Patent- und Rechtsanwälte PartG mbB

(56) Entgegenhaltungen:
- US-A- 1 634 334
- US-A- 4 186 617
- US-B1- 6 260 345

## Beschreibung

Die vorliegende Erfindung betrifft eine Rollenkette mit abwechselnd jeweils mittels eines Wiegegelenks miteinander verbundenen Innen- und Außenkettengliedern und mit mindestens einer auf Wiegebolzen des Wiegegelenks drehbar angeordneten Rolle, wobei die Rolle eine im Wesentlichen zylindrische Rollenöffnung aufweist, wobei die Wiegebolzen an einem ihrer Wiegefläche abgewandten Rücken mindestens zwei im Abstand um eine Gelenkachse winkelversetzt zueinander angeordnete Anlagebereiche, die mit der Rollenöffnung zur Anlage bringbar sind, und einen dazwischen liegenden, einen Abstand zur Rollenöffnung aufweisenden Abschnitt umfassen, wobei die Anlagebereiche der Wiegebolzen mit einem Radius konvex gekrümmt sind, der ≥ 0,9 bis < 1,0 x dem Innenradius der Rolle entspricht, und wobei die Anlagebereiche eines Wiegebolzens Bestandteile ein und derselben gedachten Zylinderfläche sind.

Aus der US 1634334 ist eine solche Rollenkette mit Wiegebolzen bekannt. Die beschriebene Kette soll ein geringes Gewicht aufweisen und kostengünstig zu fertigen sein.

Eine weitere Rollenkette mit Wiegebolzen ist aus der US 4186617 bekannt. Die Rolle ist drehbar auf den beiden Wiegebolzen angeordnet und wird von diesen abgestützt. Die Ausgestaltung der Wiegebolzen muss so erfolgen, dass diese ihre Wiegebewegung ausführen und dennoch die Rolle ausreichend abstützen. Bei der bekannten Rollenkette besteht jedes Wiegegelenk aus zwei Wiegebolzen, wobei einer der Wiegebolzen länger ausgestaltet ist als der andere. Beide Wiegebolzen erstrecken sich jedoch sowohl durch die Innenlaschen als auch die Außenlaschen. Der lange Wiegebolzen ist außerhalb der Außenlaschen entweder an jedem Ende mit einer Scheibe gesichert oder es wird jeweils eine weitere Lasche verwendet, die parallel zu den Innenlaschen angeordnet ist und die langen Wiegebolzen sichert. Die in der bekannten Druckschrift beschriebene Rollenkettenkonstruktion ist über den theoretischen Stand nie hinausgekommen und als reine Konzeptanmeldung zu verstehen. Es ist allerdings zu erwarten, dass die Rolle nicht optimal auf den beiden Wiegebolzen geführt sind und ihr unrunder Lauf für einen sehr schnellen Verschleiß sorgt. Darüber hinaus ist der Aufbau dieser Rollenkette relativ kompliziert und erfordert eine hohe Teileanzahl.

Es ist daher die Aufgabe der vorliegenden Erfindung, eine eingangs genannte, gattungsgemäße Rollenkette bereitzustellen, die einsatztauglich ist und insbesondere den Belastungen in einem hochdynamischen Kettentrieb, wie z.B. einem Steuerkettentrieb bei einem Verbrennungsmotor, gewachsen ist.

Erfindungsgemäß ist hierzu bei einer gattungsgemäßen Kette vorgesehen, dass zwischen den Anlagebereichen und der Wiegefläche jeweils ein konvex gekrümmter Übergangsbereich mit einem Übergangsradius von ≥ 0,03 bis ≤ 0,1 x der Kettenteilung vorhanden ist und dass der dazwischen liegende Abschnitt am Rücken der Wiegebolzen eine maximale Breite von 0,27-mal der Kettenteilung aufweist.

Mittels dieser Ausgestaltung ist im unbelasteten Zustand eine Vierbereichsauflage der Rolle auf den Wiegebolzen erzielt. Hierdurch erfolgt eine saubere, zentrische Führung der Rolle auf den Wiegebolzen, wodurch ein hohes Maß an Rundlauf der Rolle erhalten wird. In der Folge kann eine solche Kette auch für hochdynamische Lastwechsel eingesetzt werden, wie sie z.B. bei Steuerkettentrieben eines Verbrennungsmotors auftreten können. Darüber hinaus wird aufgrund der Vierbereichsauflage eine niedrigere Reibleistung erzielt, wodurch eine entsprechende höhere Lebensdauer gegeben ist. Zu beachten ist hierbei auch, dass bei Belastung voraussichtlich die Kraftübertragung nur durch eine Zweibereichsauflage an einem der Wiegebolzen erfolgt, während der andere zugehörige Wiegebolzen dann Spiel zur Rolle hat. Aufgrund der Zweibereichsauflage ist dennoch eine gute Kraftübertragung an den Anlagebereichen in Zugrichtung der Kette gegeben, weshalb es auch zu weitaus geringerer Verformung der Rolle kommt. Des Weiteren wird eine möglichst enge Anpassung an die Innenkrümmung der Rolle erzielt, wodurch eine großflächige Anlage bewirkt werden soll. Des Weiteren wird die Krafteinwirkung auf die Rolle besser verteilt und diese weniger elastisch verformt. Die Anlagebereiche sind um die gleiche Mittellinie gekrümmt, so dass eine optimale Anpassung an die Rollenöffnung gegeben ist. Darüber hinaus ist sichergestellt, dass zwei voneinander getrennte Anlagebereiche vorhanden sind und diese dennoch eine möglichst große Fläche einnehmen können, um die Rolle entsprechend abzustützen. Erfindungsgemäß wird ein möglichst kleiner Übergangsradius verwendet, ohne dass große Kerbwirkungen entstehen. Im Zusammenspiel mit den Anlagebereichen am Rücken der Wiegebolzen sorgt dieser Übergangsbereich dafür, dass ein möglichst kleiner Stützabstand S vorhanden ist. Der Stützabstand S gibt vor, ab wann die Wiegebolzen mit ihren Anlagebereichen an der Rolle anliegen. Je kleiner der Übergangsradius, desto kleiner der nichtragende Teil zwischen den Wiegebolzen. Bei gerade laufender Kette wird der Stützabstand S ungefähr halbiert, wenn der Übergangsradius halbiert wird. Je kleiner das Kettenrad ist, auf dem die Kette läuft, desto größer wird der Stützabstand S. Die Krafteinwirkung auf einzelne Stellen der Rolle soll möglichst gering gehalten werden, wodurch die Rolle weniger elastisch verformt wird.

Gemäß einer Ausführungsform kann der dazwischen liegende Abschnitt ein Bereich anderer Krümmung als die Anlagebereiche sein oder als eine Abflachung oder als eine Einbuchtung ausgestaltet sein. Diese von einer Zylindermantelfläche abweichende Form, die zu einem Abstand des Rückens des Wiegebolzens zur Rollenöffnung führt, dient aber auch dazu, dass ein besserer Halt der Enden des jeweiligen Wiegebolzens in den zugehörigen Laschen, in der dieser eingepresst ist, vorhanden ist (besserer Verdrehschutz). Der Abstand zwischen den Anlagebereichen am Wiegebolzen sorgt auch für ein Ölreservoir, weshalb eine verbesserte Schmierung, insbesondere aufgrund kapillarer Wirkung vorhanden ist, wodurch sich der Verschleiß zwischen der Rolle und den Wiegebolzen noch einmal reduziert.

Vorteilhafterweise kann der größte Abstand des dazwischen liegenden Abschnitts zur Rolle im Bereich zwischen ≥ 0,012 bis ≤ 0,06 x der Kettenteilung liegen. Als Kettenteilung kommen z.B. bei Steuerkettentrieben an einem Verbrennungsmotor Teilungen von 8 mm, 9,525 mm oder auch nur 7 mm in Betracht. Der hier angegebene Abstandsbereich sorgt dann für die Vorteile hinsichtlich der Verwendung als Ölreservoir zur besseren Schmierung und sorgt auch für eine ausreichende Abweichung der Form des Rückens von der Zylindermantelform und somit für einen besseren Halt im Presssitz in den Laschen.

Zur Vereinfachung des Aufbaus der Rollenkette kann gemäß einer Ausführungsform das Wiegegelenk einen langen Wiegebolzen, der dem Außenkettenglied zugeordnet ist, und einen kürzeren Wiegebolzen, der dem Innenkettenglied zugeordnet ist, umfassen. Bei einer solchen Konstruktion können die Außenlaschen des Außenkettengliedes auch gleichzeitig eine gewisse Sicherungsfunktion für die kurzen Wiegebolzen übernehmen, da diese stirnseitig überdeckt sind und sich nicht aus den zugehörigen Öffnungen der Innenlaschen herausbewegen können. Die Öffnungen der Innenlaschen müssen so ausgestaltet sein, dass sie sowohl den kurzen Wiegebolzen festhalten, als auch die Bewegung des langen Wiegebolzens zulassen. Dies wird üblicherweise durch eine im Prinzip im Querschnitt zylindrische Öffnung mit zwei nach innen gerichteten und an die Kontur der Wiegebolzen angepasste Vorsprünge erzeugt. Da die Wiegefläche freibleibt kann die Presspassung des kürzeren Wiegebolzens nicht so fest ausfallen, wie die Presspassung des langen Wiegebolzens in den Außenlaschen. Die Öffnung in den Außenlaschen ist lediglich an die Form des langen Wiegebolzens angepasst und liegt vollumfänglich an dem Endbereich des Wiegebolzens an. Deshalb ist die Außenlasche gleichzeitig auch ein Verlierschutz und verhindert ein seitliches Herauswandern des kurzen Wiegebolzens aus den Innenlaschen. Im Gegensatz hierzu ist man in der US 4186617 einen gänzlich anderen Weg gegangen, der einen viel komplizierteren Aufbau voraussetzt. Grund hierfür mag ein gewünschtes gleiches Verformungsverhalten von Innen- und Außenlaschen gewesen sein. Die erfindungsgemäße Ausführungsform ist platzsparender, weist weniger Gewicht und Material auf, ist einfacher zu fertigen bei geringeren Kosten. Diese Ausführungsform gibt zudem eine Lösung vor, bei der die Rollen entstehende Teilungsänderungen besser ausgleichen können. Diese Teilungsänderungen ergeben sich durch die Verlagerung der Berührlinie auf den Wiegeflächen der Wiegebolzen nach außen beim Abknicken der Kette auf den Kettenrädern.

Günstigerweise können die Außenkettenglieder jeweils mindestens zwei Außenlaschen und zwei lange Wiegebolzen umfassen, deren Endbereiche mit den zugehörigen Außenlaschen fest verbunden, bevorzugt eingepresst sind. Bevorzugt können die Wiegebolzen des Außenkettengliedes jeweils die innen liegenden Wiegebolzen des jeweiligen Wiegegelenks bilden, wohingegen die beiden außen liegenden Wiegebolzen jeweils Bestandteil des Innenkettengliedes sind (Definition: aus Sicht des Innengliedes).

Damit ein Abrutschen der Wiegebolzen möglichst verhindert wird und sich die Kraft auf eine größere Berührfläche verteilt und somit die Kette genauer definiert läuft, kann die Wiegefläche der Wiegebolzen mit einem Radius konvex gekrümmt sein, der ≥ 1,0 bis ≤ 1,3 x der Kettenteilung entspricht. Hierdurch wird insgesamt die Kraftübertragung besser und die Hertzsche Pressung geringer.

Bei einer weiteren Ausführungsform kann vorgesehen sein, dass die Wiegebolzen jeweils eine Querschnittsmittellinie aufweisen, die in einem Winkel α im Bereich von > 0° bis ≤ 6° zur Mittellinie der gestreckten Rollenkette ausgerichtet ist. Hierdurch werden die Wiegebolzen etwas geneigt eingesetzt, und zwar so, dass bei gerader Kette die Wiegeflächen leicht nach oben weisen, also entgegengesetzt zur Abknickrichtung der Kette am Kettenrad. Der Berührbereich (theoretisch die Berührlinie) der beiden aufeinander abrollenden Wiegeflächen verlagert sich beim Abwälzvorgang. Damit sich dieser nicht zu weit von der Mittellinie der gestreckten Kette bzw. dem Teilkreis am Kettenrad entfernt, erfolgt dieser Schrägeinbau der Wiegebolzen. Beim Geradeauslauf liegt der Berührbereich bevorzugt unterhalb der Kettenmittellinie der gestreckten Kette bzw. des Teilkreises und bewegt sich dann aufgrund des Abwälzvorgangs nach oben. Günstigerweise kann die Schrägstellung in Abhängigkeit der benutzten Kettenräder so gewählt werden, dass der Abstand zur Mittellinie beim Geradeauslauf genauso groß ist wie der Abstand nach dem vollständigen Aufsitzen auf dem Kettenrad zum Teilkreis. Hierdurch ergibt sich insgesamt eine geringere Änderung der Kettenteilung aufgrund des Verlagerns des Berührbereichs. Darüber hinaus wandert der Berührbereich beim Lauf des Kettenrads nicht so weit nach außen. Der nicht tragende Stützabstand S wird nicht zu groß. Je größer die Kettenteilung ist, desto geringer sollte die Winkeländerung ausfallen. Ebenso könnte die Lage der Wiegebolzen zur Längsachse außermittig angebracht werden, um einen ähnlichen Effekt zu erzielen.

Entsprechend könnte die Ausrichtung der Querschnittsmittellinie zweier ein Wiegegelenk bildender Wiegebolzen derart erfolgen, dass ein Berührpunkt der Wiegeflächenquerschnitte unterhalb der Mittellinie der gestreckten Rollenkette angeordnet ist.

Darüber hinaus könnte die Ausrichtung der Querschnittsmittellinie zweier ein Wiegegelenk bildender Wiegebolzen derart erfolgen, dass ein Berührpunkt der Wiegeflächenquerschnitte nach oberhalb eines Teilkreises gewandert ist, wenn das zugehörige Kettenglied vollständig auf einem Kettenrad aufliegt, z.B. gegenüber der Mittellinie der gestreckten Rollenkette nach unten um mindestens den Winkel α abgeknickt ist. Dabei sollte der Berührpunkt auf dem kleineren Kettenrad in etwa so weit nach oben über den Teilkreis wandern, wie zuvor unter die Mittellinie der gestreckten Rollenkette.

Des Weiteren bezieht sich die Erfindung auf einen Kettentrieb mit einem Antriebskettenrad und mindestens einem Abtriebskettenrad um eine Rollenkette nach einem der Ansprüche 1 bis 9. Bevorzugt kann ein solcher Kettentrieb im Automobilbereich, z.B. als Steuerkette eines Verbrennungsmotors eingesetzt werden. Diese Kettentriebe sind dynamisch hoch belastet und erfordern entsprechende Laufleistungen. Konstruktiv wird bei derartigen Kettentrieben an die Grenzen des Machbaren gegangen. Insofern können bereits kleine Änderungen eine große Wirkung haben.

Bevorzugt kann mindestens eines der Kettenräder eine Zähnezahl von ≤ 21 aufweisen und ein zwischen dem Wiegebolzen eines Kettengelenks sich beim Aufsitzen auf diesem Kettenrad einstellender Stützabstand zwischen den dem Kettenrad zugewandten Auflagebereichen maximal 0,25-mal der Kettenteilung entsprechen. Hierdurch wird sichergestellt, dass die Rolle in den Zonen größter Belastung beim Aufsitzen auf dem Kettenrad möglichst gut abgestützt wird.

Im Folgenden werden Ausführungsbeispiele der vorliegenden Erfindung anhand von Zeichnungen näher erläutert. Es zeigen:
- Fig. 1: eine schematische Darstellung eines Steuerkettentriebs an einem Verbrennungsmotor,
- Fig. 2: eine erste Ausführungsform einer erfindungsgemäßen Rollenkette im Vollschnitt,
- Fig. 3: die Rollenkette aus Fig. 2 in einer teilweise weg geschnittenen Seitenansicht,
- Fig. 4: die Rollenkette aus Fig. 2 entlang der Linie IV-IV geschnitten,
- Fig. 5: eine vergrößerte Darstellung einer zweiten Ausführungsform einer erfindungsgemäßen Rollenkette in Schnittdarstellung ähnlich Fig. 4 beim Auflauf auf ein Kettenrad,
- Fig. 6: einen vergrößerten Ausschnitt der Rollenkette aus Fig. 5 zur Erläuterung des Stützabstands S,
- Fig. 7: eine weitere Ausführungsform der Rollenkette im Vollschnitt.

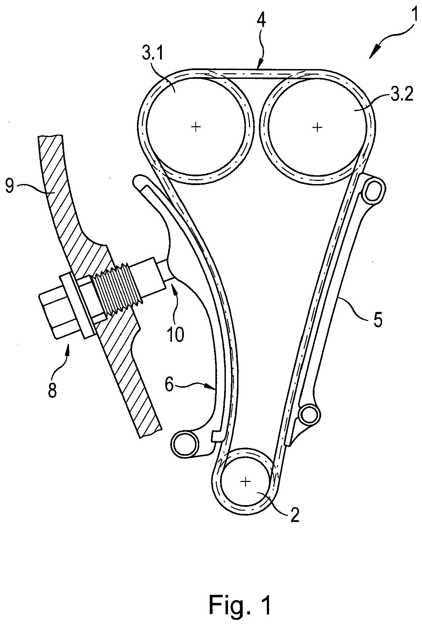

In Fig. 1 ist schematisch ein Steuerkettentrieb 1 dargestellt, der im Wesentlichen ein Kurbelwellenkettenrad 2, zwei oben liegende Nockenwellenkettenräder 3.1 und 3.2, eine um die Kettenräder 3.1, 3.2 herum gelegte endlose Steuerkette 4 und eine Führungsschiene 5 sowie eine Spannschiene 6 umfasst. Die Spannschiene 6 ist schwenkbar an ihrem Schwenkpunkt 7 gelagert und wird mittels eines Kettenspanners 8, der in einem Teil des Motorgehäuses 9 angeordnet ist, gegen die Steuerkette 4 gedrückt, indem der Spannkolben 10 des Kettenspanners 8 gegen die Rückseite der Spannschiene 6 aufdrückt.

Die Führungsschiene 5 ist dem Zugtrum des Steuerkettentriebs 1 zugeordnet und die Spannschiene 6 dem Lostrum. Ein solcher Steuerkettentrieb 1 ist eine hochdynamische Vorrichtung, die zum einen hohe Drehzahlen bewältigen und zum anderen auch den wechseldynamischen Belastungen standhalten muss. Hierbei kommen die Bestandteile an ihre Belastungsgrenzen.

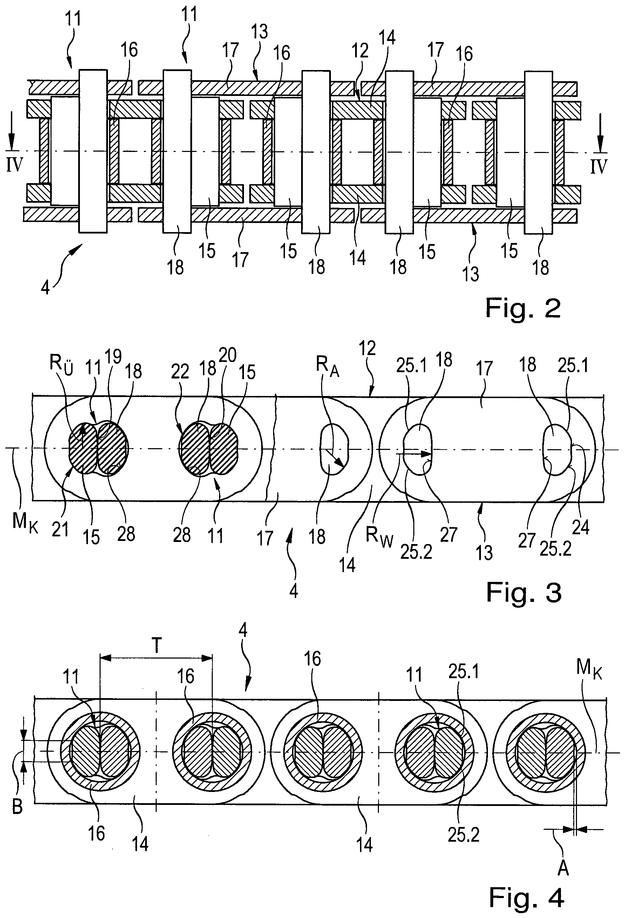

Im Folgenden wird eine erste Ausführungsform einer Steuerkette 4 anhand der Fig. 2 bis 4 näher erläutert, wie sie in dem obigen Steuerkettentrieb 1 eingesetzt werden kann.

Die Steuerkette 4 besteht aus abwechselnd mittels eines Kettengelenks 11 miteinander verbundenen Innen- und Außenkettengliedern 12 und 13.

Jedes Innenkettenglied 12 besteht aus zwei im parallelen Abstand zueinander angeordneten Innenlaschen 14 aus Stahlblech, zwei im parallelen Abstand zueinander angeordnete kurze Wiegebolzen 15 aus Stahl und zwei im Abstand zueinander angeordneten, um das jeweilige Kettengelenk 11 drehbar angeordnete Rollen 16 aus Stahl.

Jedes Außenkettenglied 13 besteht aus zwei im parallelen Abstand zueinander, die Innenlaschen 14 außen übergreifende Außenlaschen 17 aus Stahlblech und zwei diese miteinander verbindende, im parallelen Abstand zueinander angeordnete lange Wiegebolzen 18 aus Stahl.

Der kurze Wiegebolzen 15 des Innenkettengliedes 12 und der lange Wiegebolzen 18 des Außenkettengliedes 13 bilden gemeinsam das Kettengelenk 11. Die Querschnitte des kurzen Wiegebolzens 15 und des langen Wiegebolzens 18 sind identisch. Jeder Wiegebolzen 15 oder 18 weist eine ballige, d.h. konvexe Wiegefläche 19 bzw. 20 mit einem Radius R_{W} auf, der 1,15 x der Kettenteilung T entspricht, also im Bereich von ≥ 1,0 bis ≤ 1,3 x der Kettenteilung T liegt. Die Kettenteilung T entspricht in dieser Ausführungsform dem Berührabstand der Wiegefläche 19 bzw. 20 des Innenkettengliedes 12 bzw. des Außenkettengliedes 13 bei gestreckter Kette.

Bei einer Kettenteilung von 8 mm entspricht dies einem Radius R_{W} von 9,2 mm.

Der der Wiegefläche 19 bzw. 20 gegenüberliegende Rücken 21 bzw. 22 ist ebenfalls konvex gekrümmt mit einem Radius R_{A} der im Wesentlichen dem Radius der Rollenöffnung 23 entspricht. Der Rücken 21. bzw. 22 weist zentral eine Einbuchtung 24 auf. Alternativ kann aber auch eine Abflachung oder eine andere Krümmung verwendet werden, so dass dieser Abschnitt (Einbuchtung 24) im Abschnitt zur Rollenöffnung 23 angeordnet ist. Auf Grund der Einbuchtung 24 ergeben sich zwei winkelversetzt zueinander angeordnete Anlagebereiche 25.1 und 25.2 des Rückens 21 bzw. 22. Der größte Abstand A der Einbuchtung 24 zur Rolle 16 beträgt 0,036 x der Kettenteilung T und beträgt im vorliegenden Fall 0,288 mm und liegt somit im Bereich von ≥ 0,012 bis 0,06 x der Kettenteilung T. Zwischen den Anlagebereichen 25.1 und 25.2 und der zugehörigen Wiegefläche 19 bzw. 20 ist ein ebenfalls konvex gekrümmter Übergangsbereich 26.1 bzw. 26.2 geformt, der jeweils mit einem Übergangsradius R_{Ü} gekrümmt ist, der 0,065 x der Kettenteilung T und somit im vorliegenden Fall 0,52 mm beträgt und demnach im Bereich von ≥ 0,03 bis ≤ 0,1 x der Kettenteilung T liegt.

Die Einbuchtung 24 weist eine maximale Breite B von ≤ x der Kettenteilung T auf.

Der Radius R_{A} der Anlagebereiche 25.1 und 25.2 liegt im Bereich von ≥ 0,9 bis 1,0 x dem Innenradius der Rolle 16.

Aus Übersichtlichkeitsgründen sind die Wiegebolzen 15 bzw. 18 zwar jeweils im Vollschnitt, aber nicht gestrichelt, in Figur 2 dargestellt, um sie von den anderen Bauteilen besser abzuheben.

Die Wiegebolzen 15 und 18 sind in die jeweiligen Innenlaschen 14 bzw. Außenlaschen 17 gerade eingesetzt, d.h., dass deren jeweilige Querschnittsmittelachse M_{W} bei gerader Kette deckungsgleich mit der Kettenmittellinie M_{K} verläuft.

Die dargestellte Steuerkette 4 ist eine Rollenkette mit Wiegegelenken.

Die Außenlaschen 17 weisen jeweils zwei Öffnungen 27 auf, die an die Querschnittsform der zugehörigen langen Wiegebolzen 18 angepasst sind, so dass die Endbereiche dieser Wiegebolzen 18 in die Außenlaschen 17 eingepresst sind.

Die Innenlaschen 14 weisen jeweils zwei Öffnungen 28 auf, deren Öffnungsquerschnitt so gestaltet ist, dass sowohl der kurze Wiegebolzen 15 als auch der lange Wiegebolzen 18 durch diese hindurchgeführt sind. In etwa die eine Hälfte der Öffnung 28 ist an den Rücken 22 und die Übergangsbereiche 26.1 und 26.2 des kurzen Wiegebolzen 15 angepasst. Der etwas im Querschnitt größere restliche Bereich der Öffnung 28 ist zwar an die Querschnittsform des langen Wiegebolzens 18 angepasst, aber es verbleibt genügend Platz für ein Abwälzen des langen Wiegebolzens 18 an dem kurzen Wiegebolzen 15. Das bedeutet, dass der kurze Wiegebolzen 15 in der jeweiligen zugehörigen Öffnung 28 eingeklemmt ist und der lange Wiegebolzen 18 sich in dieser bewegen kann, so dass ein Wälzvorgang zum Bereitstellen der Gelenkfunktion des Kettengelenkes 11 vorhanden ist. Die kurzen Wiegebolzen 15 weisen eine Länge auf, so dass sie geringfügig über die Außenflächen der Innenlasche 14 überstehen, aber noch einen geringen Abstand zu den Innenflächen der Außenlaschen 17 haben. Hierdurch sind die kurzen Wiegebolzen 15 noch zusätzlich durch die Außenlaschen 17 gesichert, die ein Herauswandern aus der Innenlasche 14 verhindern.

Im Folgenden wird die Wirkungs- und Funktionsweise der oben beschriebenen Steuerkette 4 näher erläutert. Im unbelasteten Zustand (siehe Figur 4) bieten die beiden Wiegebolzen 15, 18 jeder Rolle 16 vier Anlagebereiche 25.1 und 25.2, so dass diese zentrisch auf den Wiegebolzen 15, 18 rotieren kann. Auf Grund der gewählten Radi R_{A} erfolgt eine möglichst großflächige Anlage, so dass auch im Belastungszustand, wenn voraussichtlich nur zwei Anlagebereiche 25.1 bzw. 25.2 pro Kettengelenk 11 tragen, eine Verschleißreduktion bewirkt ist. Zusätzlich bietet die Einbuchtung 24 einen Aufnahmeraum zur Aufnahme von Schmierstoffen. Auf Grund dieser Ausgestaltung ist die Steuerkette 4 in der Lage, für einen Einsatz an einem Verbrennungsmotor hergenommen zu werden. Ein relativ großer Wälzradius R_{W} sorgt ebenfalls für eine lange Lebensdauer des Kettengelenks 11.

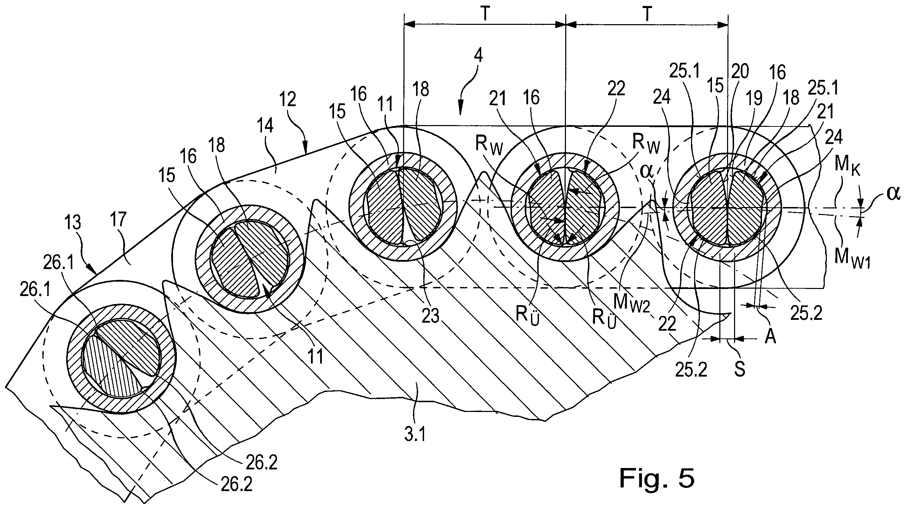

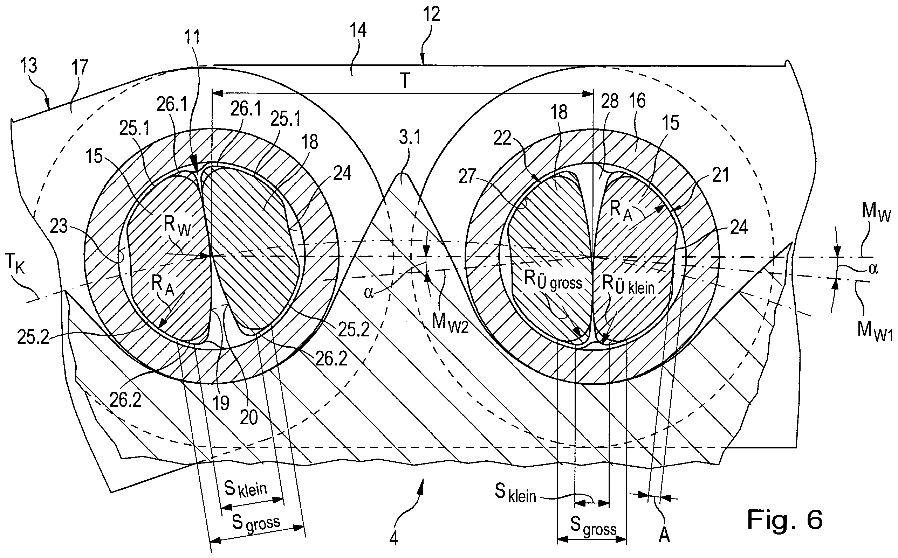

Im Folgenden wird nun anhand der Fig. 5 und 6 eine zweite Ausführungsform der vorliegenden Erfindung näher erläutert. Insbesondere anhand der Fig. 6 wird noch der Zusammenhang zwischen kleinem und großem Übergangsradius R_{Ü} erläutert. Aus Übersichtlichkeitsgründen ist der kurze Wiegebolzen 15 nicht gestrichelt dargestellt.

Die in den Fig. 5 und 6 dargestellte Steuerkette 4 unterscheidet sich zu der in den Fig. 2 bis 4 dargestellten Steuerkette 4 hauptsächlich in einer optimierten Ausgestaltung des Querschnitts der Wiegebolzen 15 bzw. 18 und der daran angepassten Öffnungsquerschnitte der Öffnungen 27 in den Außenlaschen 17 und den Öffnungen 28 in den Innenlaschen 14. Darüber hinaus sind die Wiegebolzen 15 bzw. 18 etwas geneigt in den Innenlaschen 14 bzw. Außenlaschen 17 angeordnet. Das bedeutet, dass bei gerader Steuerkette 4 die Mittellinien M_{W1} der kurzen Wiegebolzen 15 bzw. M_{W2} der langen Wiegebolzen 8 im Winkel α zur Kettenmittellinie M_{K} ausgerichtet sind. Ansonsten ist der Kettenaufbau identisch zu dem vorangegangenen Ausführungsbeispiel, weshalb ergänzend hinsichtlich der übrigen Bauelemente auf die obige Beschreibung verwiesen wird und soweit die Elemente in den Fig. 5 und 6 sichtbar sind, die gleichen Bezugsziffern verwendet werden.

Die Schrägstellung der Wiegebolzen 15 und 18 bewirkt, dass bei gerader Kette ein Berührpunkt B_{P} der beiden Querschnitte der Wiegebolzen 15 und 18 unterhalb der Kettenmittellinie M_{K} vorhanden ist. Im vorliegenden Ausführungsfall ist ein Winkel α von 5° gewählt worden, somit liegt er in einem Bereich von > 0 bis ≤ 6°. Die Wirkung dieser Schrägstellung zeigt sich beim Auflaufen auf z.B. ein Kurbelwellenkettenrad 2. Sobald nämlich die Steuerkette 4 in einem Kettengelenk 11 abknickt, so dass die Rolle 16 sauber in der Zahnlücke des Kurbelwellenkettenrades 2 anliegt, wandert der Berührpunkt B aufgrund des Abwälzvorgangs der beiden Wiegeflächen 19 bzw. 20 aufeinander nach oben und liegt dann (siehe Figur 6) oberhalb der Mittellinie M_{K} bzw. im Verhältnis zum Kurbelwellenkettenrades 2 oberhalb des Teilkreises T_{K}. Der Berührpunkt B_{P} bzw. (auf die gesamte an der Wälzbewegung einnehmende Länge der Wiegebolzen 15 und 18 bezogen) die Berührlinie bzw. (bei Belastung) die Berührfläche wandert bei Beibehaltung des gleichen Abstands jeweils von der einen Seite zur anderen Seite der Mittellinie M_{K}, wodurch eine Vergleichmäßigung und ein größtmöglicher Ausgleich des dadurch verursachten Teilungsfehlers bewirkt wird. Der Abstand der Berührpunkte B_{P} aufeinanderfolgender Kettengelenke 11 entspricht bei schräg eingebauten Wiegebolzen 15 bzw. 18 in der Regel nämlich nicht der Teilung T bzw. hängt von der Stellung des Kettengelenks 11 ab.

Dieser Schrägeinbau der Wiegebolzen 15 bzw. 18 hat aber auch noch einen positiven Einfluss auf den tragenden Stützabstand S jeden Kettengelenks 11. Der Stützabstand S wird auf der Seite der Steuerkette 4 gemessen, die die Auflaufseite auf ein Kettenrad darstellt. Aufgrund der Schrägstellung um den Winkel α rückt der Stützabstand S zusammen. Der Stützabstand S kennzeichnet den Bereich, der nicht an der Abstützung der Rolle 16 beteiligt ist. D.h., bei dem die Anlagebereiche 25.2 in die jeweiligen Übergangsbereiche 26.2 übergehen.

Wie anhand der Fig. 6 zu sehen ist, hat aber nicht nur diese Winkelstellung Einfluss auf den Stützabstand S, sondern auch noch der Radius R_{Ü} des Übergangsbereichs 26.2. Zur Veranschaulichung ist in Fig. 6 bei jedem Wiegebolzen 15 bzw. 18 ein großer Radius R_{Ügroß} und ein kleiner Radius R_{Üklein} eingezeichnet, um diesen Unterschied herauszuheben. Entsprechend ergibt sich in Abhängigkeit des gewählten Radius R_{Ügroß} bzw. R_{Üklein} ein Stützabstand Sₖₗₑᵢₙ oder ein Stützabstand S_{groß}. Der Radius R_{Üklein} beträgt im vorliegenden Beispiel 0,24 mm und der Radius R_{Ügroß} im vorliegenden Beispiel 0,8 mm; beide liegen somit im Bereich von ≥ 0,03 bis ≤ 0,1 x der Kettenteilung T.

Die Optimierung des Stützabstandes S sorgt für eine bessere Lastverteilung zwischen den Wiegebolzen 15 bzw. 18 und der Rolle 16, was letztendlich zu weniger Verformung der Rolle 16 führt. Insgesamt wird mit der Ausgestaltung der Anlagebereiche 25.1 und 25.2 und der entsprechenden Optimierung der Übergangsbereiche 26.1 und 26.2 versucht, eine möglichst große Anlagefläche zwischen dem Wiegebolzen 15 bzw. 18 und der Rolle 16 zu erhalten. Hierbei ist auch die Ausgestaltung der Einbuchtung 24 zu berücksichtigen, die nicht zu groß ausfallen soll. Es hat sich aber herausgestellt, dass eine Aufteilung in zwei Anlagebereiche 25.1 und 25.2 für jeden Wiegebolzen 15 bzw. 18 einen Vorteil darstellt, weil eben dieser zentrale Bereich des Rückens 21 bzw. 22 des Wiegebolzens 15 bzw. 18 nicht an der Tragfunktion für die Rolle 16 beteiligt ist.

Die Wiegebolzen 15 bzw. 18 sind so angeordnet, dass die Radien R_{A} der Anlagebereiche 25.1, 25.2 einen gemeinsamen Mittelpunkt aufweisen, der dem Mittelpunkt des Rollenquerschnitts 16 entspricht. Des Weiteren nehmen die Anlagebereiche 25.1, 25.2 der beiden ein Kettengelenk 11 bildenden Wiegebolzen 15 und 18 einen Winkelbereich von mindestens 240° ein, so dass eine Abstützung der Rollen 16 über einen großen Abschnitt gegeben ist.

Anhand der Fig. 6 ist zu erkennen, dass durch das Abknicken des Kettengelenks 11 der Stützabstand S größer wird. Durch die hier getroffenen Maßnahmen wird dieser Abstand S trotzdem relativ klein gehalten. Aufgrund der konkaven Einbuchtung 24 wird ein Schmiermittelreservoir geformt, das aufgrund des relativ kleinen Abstandes A zur Hülsenöffnung 23 eine gewisse Kapillarwirkung bereit hält.

Die getroffenen Maßnahmen führen bei diesem Ausführungsbeispiel in Kombination zu einem optimierten Zusammenspiel von Wiegebolzen 15, 18 und der Rolle 16, was in der Folge zu einer Langlebigkeit des Kettengelenks 11 führt.

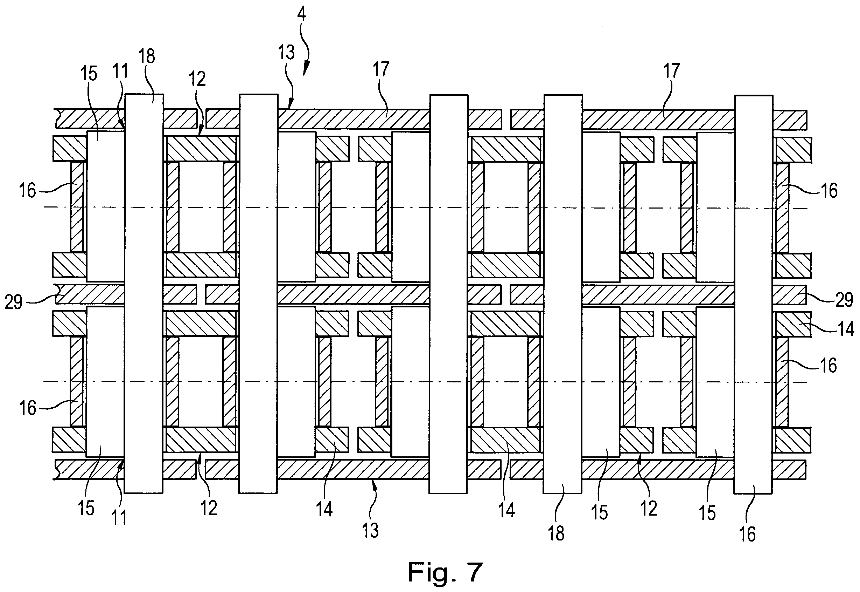

Anhand der Fig. 7 wird nun eine weitere Ausführungsform einer erfindungsgemäßen Steuerkette 4 gezeigt. Es handelt sich um eine Duplexkette, wobei zwei Reihen von Innenkettengliedern 12 parallel nebeneinander angeordnet sind. Die Bauelemente des Innenkettengliedes 12 sind demnach identisch zu den Bauelementen des Innenkettengliedes 12 der Ausführungsform gemäß der Fig. 2 bis 4 ausgestaltet. Es wird demnach unter Verwendung der gleichen Bezugsziffern auf die obige Beschreibung verwiesen.

Lediglich das Außenkettenglied 13 weist einen anderen Aufbau auf. Es werden zum ersten Ausführungsbeispiel identische Außenlaschen 17 verwendet. Die langen Wiegebolzen 18 sind entsprechend der Breite der Duplexkette länger ausgestaltet (in etwa doppelt so lang). Zusätzlich ist zwischen den beiden Reihen der Innenkettenglieder 12 noch eine Mittellasche 29 angeordnet. Diese kann identisch zur Außenlasche 17 ausgestaltet sein und wäre dann auf die langen Wiegebolzen 18 aufgepresst oder diese kann größere Öffnungen aufweisen und wäre dann mit geringem Spiel auf die langen Wiegebolzen 18 aufgeschoben. Form und Funktion der Elemente sind wiederum im Wesentlichen identisch zum ersten Ausführungsbeispiel, weshalb hierauf verwiesen wird. Auch die geneigte Anordnung der Wiegebolzen 15 bzw. 18 wie anhand der Fig. 5 und 6 beschrieben, unter gegebenenfalls gleichzeitiger Anwendung optimierter Übergangsradien R_{Ü}, kann ebenfalls verwendet werden.

Die Verwendung derartiger Steuerketten an einem Verbrennungsmotor setzt in aller Regel voraus, dass zumindest eines der Kettenräder, insbesondere des Kurbelwellenkettenrads 2 eine Zähnezahl ≤ 21 aufweist. Hierdurch erfolgt ein starkes Abknicken der Steuerkette 4 im Kettengelenk 11, was mit hohen Belastungen einher geht. Deshalb ist eine Optimierung des Stützabstandes S vorteilhafter Weise auch ein wichtiger Aspekt. Dieser soll üblicher Weise beim Aufsitzen auf einen zum Kettentrieb gehörenden Kettenrad nicht größer werden als 0,25-mal der Kettenteilung T (Sₘₐₓ = 0,25xT). Bei gerade verbauten Wiegebolzen 15 bzw. 18 sollten zumindest die Übergangsradien R_{Ü} zu diesem Zweck entsprechend gewählt werden.

### Bezugszeichenliste:

- **1**: Steuerkettentrieb
- **2**: Kurbelwellenkettenrad
- **3.1,3.2**: Nockenwellenkettenrad
- **4**: Steuerkette
- **5**: Führungsschiene
- **6**: Spannschiene
- **7**: Schwenkpunkt
- **8**: Kettenspanner
- **9**: Motorgehäuse
- **10**: Spannkolben
- **11**: Wiegegelenk
- **12**: Innenkettenglied
- **13**: Außenkettenglied
- **14**: Innenlasche
- **15**: Kurzer Wiegebolzen
- **16**: Rolle
- **17**: Außenlasche
- **18**: Langer Wiegebolzen
- **19**: Wiegefläche kurzer Wiegebolzen
- **20**: Wiegefläche langer Wiegebolzen
- **21**: Rücken kurzer Wiegebolzen
- **22**: Rücken langer Wiegebolzen
- **23**: Rollenöffnung
- **24**: Einbuchtung
- **25.1,25.2**: Anlagebereich
- **26.1,26.2**: Übergangsbereich
- **27**: Öffnung Außenlasche
- **28**: Öffnung Innenlasche
- **29**: Mittellasche
- **A**: Abstand zur Rolle (≥ 0,012 bis ≤ 0,6 x T)
- **B**: Breite der Einbuchtung (max. 0,27 x T)
- **B_{P}**: Berührungspunkt
- **R_{A}**: Radius des Anlagebereichs (2 0,9 bis < 1,0 Innenradius der Rolle)
- **R_{W}**: Radius der Wiegefläche (≥ 1,0 bis ≤ 1,3 x T)
- **R_{Ü}**: Übergangsradius (≥ 0,03 bis ≤ 0,1 x T)
- **M_{K}**: Mittellinie der gestreckten Rollenkette
- **M_{W1}**: Mittellinie kurzer Wiegebolzen (Symmetrielinie)
- **M_{W2}**: Mittellinie langer Wiegebolzen (Symmetrielinie)
- **S**: Stützabstand (max. 0,25 x T)
- **α**: Neigungswinkel eines Wiegebolzens (> 0° bis ≤ 6°)
- **T**: Teilung

## Patentansprüche

1. Rollenkette (4) mit einer Kettenteilung (T) mit abwechselnd jeweils mittels eines Wiegegelenks (11) miteinander verbundenen Innen- und Außenkettengliedern (12,13) und mit mindestens einer auf Wiegebolzen (15,18) des Wiegegelenks (11) drehbar angeordneten Rolle (16), wobei die Rolle (16) eine im Wesentlichen zylindrische Rollenöffnung aufweist, wobei die Wiegebolzen (15, 18) an einem ihrer Wiegefläche (19,20) abgewandten Rücken (21,22) mindestens zwei im Abstand um die Gelenkachse (G) winkelversetzt zueinander angeordnete Anlagebereiche (25.1,25.2), die mit der Rollenöffnung (23) zur Anlage bringbar sind, und einen dazwischen liegenden, einen Abstand (A) zur Rollenöffnung (23) aufweisenden Abschnitt (24) umfassen, wobei die Anlagebereiche (25.1,25.2) der Wiegebolzen (15,18) mit einem Radius (R_{A}) konvex gekrümmt sind, der ≥ 0,9 bis ≤ 1,0 x dem Innenradius der Rolle (23) entspricht und wobei die Anlagebereiche (25.1, 25.2) eines Wiegebolzens (15, 18) Bestandteile ein und derselben gedachten Zylinderfläche sind, **dadurch gekennzeichnet, dass** zwischen den Anlagebereichen (25.1,25.2) und der Wiegefläche (19,20) jeweils ein konvex gekrümmter Übergangsbereich (26.1,26.2) mit einem Übergangsradius (R_{Ü}) von ≥ 0,03 bis ≤ 0,1 x der Kettenteilung (T) vorhanden ist und dass der dazwischen liegende Abschnitt (24) am Rücken (21,22) der Wiegebolzen (15,18) eine maximale Breite (B) von max. 0,27-mal der Kettenteilung (T) aufweist.

2. Rollenkette (4) nach Anspruch 1, **dadurch gekennzeichnet, dass** der dazwischen liegende Abschnitt (24) ein Bereich anderer Krümmung als die Anlagebereiche (25.1,25.2) ist oder als eine Abflachung oder als eine Einbuchtung ausgestaltet ist.

3. Rollenkette (4) nach Anspruch 1 oder 2, **dadurch gekennzeichnet, dass** der größte Abstand (A) des dazwischen liegenden Abschnitts (24) zur Rolle (16) im Bereich zwischen ≥ 0,012 bis ≤ 0,06 x-mal der Kettenteilung (T) liegt.

4. Rollenkette (4) nach einem der Ansprüche 1 bis 3, **dadurch gekennzeichnet, dass** das Wiegegelenk (11) einen langen Wiegebolzen (18), der dem Außenkettenglied (13) zugeordnet ist, und einen kürzeren Wiegebolzen (15) der dem Innenkettenglied (12) zugeordnet ist, umfasst.

5. Rollenkette (4) nach Anspruch 4, **dadurch gekennzeichnet, dass** die Außenkettenglieder (13) jeweils mindestens zwei Außenlaschen (17) und zwei lange Wiegebolzen (18) umfassen, deren Endbereiche mit den zugehörigen Außenlaschen (17) fest verbunden, bevorzugt eingepresst, sind.

6. Rollenkette (4) nach einem der vorangegangenen Ansprüche 1 bis 5, **dadurch gekennzeichnet, dass** die Wiegefläche (19,20) der Wiegebolzen (15,18) mit einem Radius (R_{W}) konvex gekrümmt ist, der ≥ 1,0 bis ≤ 1,3 x der Kettenteilung (T) entspricht.

7. Rollenkette (4) nach einem der Ansprüche 1 bis 6, **dadurch gekennzeichnet, dass** die Wiegebolzen (15,18) jeweils eine Querschnittsmittellinie (M_{W1},M_{W2}) aufweisen, die in einem Winkel (α) im Bereich von > 0° bis ≤ 6° zur Mittellinie (M_{K}) der gestreckten Rollenkette (4) ausgerichtet ist.

8. Rollenkette (4) nach Anspruch 7, **dadurch gekennzeichnet, dass** die Ausrichtung der Querschnittsmittellinien (M_{W1},M_{W2}) zweier ein Wiegegelenk (11) bildender Wiegebolzen (15, 18) derart erfolgt, dass ein Berührpunkt (B_{P}) der Wiegeflächenquerschnitte unterhalb der Mittellinie (M_{K}) der gestreckten Rollenkette (4) angeordnet ist.

9. Rollenkette (4) nach Anspruch 7 oder 8, **dadurch gekennzeichnet, dass** die Ausrichtung der Querschnittsmittellinie (M_{W1},M_{W2}) zweier ein Wiegegelenk (11) bildender Wiegebolzen (15,18) derart erfolgt, dass ein Berührpunkt (B_{P}) der Wiegeflächenquerschnitte nach oberhalb eines Teilkreises (T_{K}) gewandert ist, wenn das zugehörige Kettenglied vollständig auf einem Kettenrad aufliegt.

10. Kettentrieb (1) mit einem Antriebskettenrad (2) mit mindestens einem Abtriebskettenrad (3.1, 3.2) und einer Rollenkette (4) nach einem der Ansprüche 1 bis 9.

11. Kettentrieb (1) nach Anspruch 10, **dadurch gekennzeichnet, dass** mindestens eines der Kettenräder (2) eine Zähnezahl von ≤ 21 aufweist und ein zwischen den Wiegebolzen (15, 18) eines Kettengelenks (11) sich bei Aufsitzen auf diesem Kettenrad (2) einstellender Stützabstand (S) zwischen den dem Kettenrad zugewandten Auflagebereichen (25.2) maximal 0,25-mal der Kettenteilung (T) entspricht.

## Claims

1. Roller chain (4) with a chain pitch (T) having inner and outer chain links (12, 13) which are connected to one another alternatingly in each case by means of a rocker joint (11), and having at least one roller (16) arranged rotatably on rocker bolts (15, 18) of the rocker joint (11), wherein the roller (16) has a substantially cylindrical roller opening, wherein the rocker bolts (15, 18) on a back (21, 22) facing away from their rocker surface (19, 20) comprise at least two contact regions (25.1, 25.2) which are arranged angularly offset relative to one another at a distance about the joint axis (G) and which can be brought into contact with the roller opening (23), and comprise a section (24) lying thereinbetween and having a distance (A) from the roller opening (23), wherein the contact regions (25.1, 25.2) of the rocker bolts (15, 18) are convexly curved with a radius (R_{A}) which corresponds to ≥ 0.9 to ≤ 1.0 x the inner radius of the roller (23), and wherein the contact regions (25.1, 25.2) of a rocker bolt (15, 18) are parts of one and the same imaginary cylinder surface, **characterized in that** a convexly curved transition region (26.1, 26.2) with a transition radius (R_{Ü}) of ≥ 0.03 to ≤ 0.1 x the chain pitch (T) is respectively present between the contact regions (25.1, 25.2) and the rocker surface (19, 20), and that the section (24) lying thereinbetween on the back (21, 22) of the rocker bolts (15, 18) has a maximum width (B) of not more than 0.27 times the chain pitch (T).

2. Roller chain (4) according to claim 1, **characterized in that** the section (24) lying thereinbetween is a region of different curvature than the contact regions (25.1, 25.2) or is designed as a flattened portion or as an indentation.

3. Roller chain (4) according to claim 1 or 2, **characterized in that** the greatest distance (A) of the section (24) lying thereinbetween from the roller (16) is in the range between ≥ 0.012 to ≤ 0.06 x times the chain pitch (T).

4. Roller chain (4) according to one of claims 1 to 3, **characterized in that** the rocker joint (11) comprises a long rocker bolt (18) associated with the outer chain link (13) and a shorter rocker bolt (15) associated with the inner chain link (12).

5. Roller chain (4) according to claim 4, **characterized in that** the outer chain links (13) each comprise at least two outer plates (17) and two long rocker bolts (18), the end regions of which are firmly connected, preferably pressed in, to the associated outer plates (17).

6. Roller chain (4) according to one of the preceding claims 1 to 5, **characterized in that** the rocker surface (19, 20) of the rocker bolts (15, 18) is convexly curved with a radius (Rw) which corresponds to ≥ 1.0 to ≤ 1.3 x the chain pitch (T).

7. Roller chain (4) according to one of claims 1 to 6, **characterized in that** the rocker bolts (15, 18) each have a cross-sectional center line (M_{W1}, M_{W2}) which is aligned at an angle (α) in the range of > 0° to ≤ 6° to the center line (M_{K}) of the stretched roller chain (4).

8. Roller chain (4) according to claim 7, **characterized in that** the alignment of the cross-sectional center lines (M_{W1}, M_{W2}) of two rocker bolts (15, 18) forming a rocker joint (11) takes place in such a way that a contact point (B_{P}) of the rocker surface cross-sections is arranged below the center line (M_{K}) of the stretched roller chain (4).

9. Roller chain (4) according to claim 7 or 8, **characterized in that** the alignment of the cross-sectional center line (M_{W1}, M_{W2}) of two rocker bolts (15, 18) forming a rocker joint (11) is such that a contact point (B_{P}) of the rocker surface cross-sections has moved to above a pitch circle (T_{K}) when the associated chain link fully rests on a chain wheel.

10. Chain drive (1) with a drive chain wheel (2) with at least one output chain wheel (3.1, 3.2) and a roller chain (4) according to one of claims 1 to 9.

11. Chain drive (1) according to claim 10, **characterized in that** at least one of the chain wheels (2) has a number of teeth of ≤ 21 and a support distance (S) between the bearing regions (25.2) facing the chain wheel, which support distance (S) is set between the rocker bolts (15, 18) of a chain joint (11) when sitting on said chain wheel (2), corresponds to a maximum of 0.25 times the chain pitch (T).

## Revendications

1. Chaine à rouleaux (4) présentant un pas de chaine (T) et comprenant alternativement des maillons de chaine intérieurs et extérieurs (12, 13) reliés respectivement au moyen d'une articulation d'oscillation (11), et comprenant au moins un rouleau (16) agencé de manière rotative sur des broches d'oscillation (15, 18) de l'articulation d'oscillation (11), chaine dans laquelle le rouleau (16) présente une ouverture de rouleau sensiblement cylindrique,
dans laquelle les broches d'oscillation (15, 18) comportent sur un dos (21, 22) opposé à leur surface d'oscillation (19, 20), au moins deux zones d'appui (25.1, 25.2), qui sont agencées de manière angulairement décalée l'une par rapport à l'autre autour de l'axe d'articulation (G) et qui peuvent être amenées en appui contre l'ouverture de rouleau (23), et, situé entre ces deux zones d'appui, un tronçon intermédiaire (24) présentant une distance d'espacement (A) par rapport à l'ouverture de rouleau (23),
dans laquelle les zones d'appui (25.1, 25.2) des broches d'oscillation (15, 18) sont courbées de manière convexe avec un rayon (R_{A}), qui correspond à ≥ 0,9 à ≤ 1,0 fois le rayon intérieur du rouleau (23), et
dans laquelle les zones d'appui (25.1, 25.2) d'une broche d'oscillation (15, 18) sont des parties intégrantes d'une seule et même surface de cylindre fictive,
**caractérisée en ce qu'**entre les zones d'appui (25.1, 25.2) et la surface d'oscillation (19, 20), il existe respectivement une zone de transition (26.1, 26.2) à courbure convexe, qui présente un rayon de transition (R_{Ü}) de ≥ 0,03 à ≤ 0,1 fois le pas de chaine (T), et **en ce que** le tronçon intermédiaire (24) sur le dos (21, 22) des broches d'oscillation (15, 18), présente une largeur (B) maximale d'au maximum 0,27 fois le pas de chaine (T).

2. Chaine à rouleaux (4) selon la revendication 1, **caractérisée en ce que** le tronçon intermédiaire (24) est une zone d'une courbure autre que celle des zones d'appui (25.1, 25.2), ou bien est réalisé sous la forme d'un méplat ou d'un renfoncement.

3. Chaine à rouleaux (4) selon la revendication 1 ou la revendication 2, **caractérisée en ce que** la distance d'espacement (A) la plus grande du tronçon intermédiaire (24) au rouleau (16) se situe dans une plage ≥ 0,012 à ≤ 0,06 fois le pas de chaine (T).

4. Chaine à rouleaux (4) selon l'une des revendications 1 à 3, **caractérisée en ce que** l'articulation d'oscillation (11) comprend une broche d'oscillation longue (18), qui est associée au maillon de chaine extérieur (13), et une broche d'oscillation plus courte (15), qui est associée au maillon de chaine intérieur (12).

5. Chaine à rouleaux (4) selon la revendication 4, **caractérisée en ce que** les maillons de chaine extérieurs (13) comprennent respectivement au moins deux éclisses extérieures (17) et deux broches d'oscillation longues (18) dont les zones d'extrémité sont liées de manière fixe aux éclisses extérieures (17) associées, de préférence par montage à force.

6. Chaine à rouleaux (4) selon l'une des revendications précédentes 1 à 5, **caractérisée en ce que** la surface d'oscillation (19, 20) des broches d'oscillation (15, 18) est courbée de manière convexe avec un rayon (R_{W}), qui correspond à ≥ 1,0 à ≤ 1,3 fois le pas de chaine (T).

7. Chaine à rouleaux (4) selon l'une des revendications 1 à 6, **caractérisée en ce que** les broches d'oscillation (15, 18) présentent respectivement une ligne médiane de section transversale (M_{W1}, M_{W2}), qui est orientée selon un angle (α) dans une plage > 0° à ≤ 6° par rapport à la ligne médiane (M_{K}) de la chaine à rouleaux (4) étendue.

8. Chaine à rouleaux (4) selon la revendication 7, **caractérisée en ce que** l'orientation des lignes médianes de section transversale (M_{W1}, M_{W2}) de deux broches d'oscillation (15, 18) formant une articulation d'oscillation (11), est telle qu'un point de contact (B_{P}) des sections transversales de surface d'oscillation soit agencé en-dessous de la ligne médiane (M_{K}) de la chaine à rouleaux (4) étendue.

9. Chaine à rouleaux (4) selon la revendication 7 ou la revendication 8, **caractérisée en ce que** l'orientation des lignes médianes de section transversale (M_{W1}, M_{W2}) de deux broches d'oscillation (15, 18) formant une articulation d'oscillation (11), est telle qu'un point de contact (B_{P}) des sections transversales de surface d'oscillation ait migré jusqu'au-dessus d'un cercle primitif de référence (T_{K}), lorsque le maillon de chaine associé repose entièrement sur une roue dentée à chaine.

10. Transmission d'entrainement à chaine (1) comprenant une roue dentée à chaine menante (2), au moins une roue dentée à chaine menée (3.1, 3.2), et une chaine à rouleaux (4) selon l'une des revendications 1 à 9.

11. Transmission d'entrainement à chaine (1) selon la revendication 10, **caractérisée en ce que** l'une au moins des roues dentées à chaine (2) présente un nombre de dents ≤ 21, et une distance d'appui (S) entre les zones d'appui (25.2) dirigées vers la roue dentée à chaine, qui s'établit entre les broches d'oscillation (15, 18) d'une articulation d'oscillation (11) lors de l'application sur cette roue dentée à chaine (2), correspond au maximum à 0,25 fois le pas de chaine (T).
